## Europäisches Patentamt

## European Patent Office

## Office européen des brevets

(11) Publication number: **0 144 370**
**B1**

## EUROPEAN PATENT SPECIFICATION

(45) Date of publication of patent specification: **16.05.90**

(51) Int. Cl.⁵: **F 24 F 11/04**

(21) Application number: **84902009.4**

(22) Date of filing: **17.05.84**

(86) International application number:
**PCT/FI84/00038**

(87) International publication number:
**WO 84/04804 06.12.84 Gazette 84/28**

(54) FLOW REGULATOR AND ITS USE.

(30) Priority: **20.05.83 FI 831802**

(43) Date of publication of application:
**19.06.85 Bulletin 85/25**

(45) Publication of the grant of the patent:
**16.05.90 Bulletin 90/20**

(84) Designated Contracting States:
**AT BE CH DE FR GB LI NL SE**

(56) References cited:
**DE-A-2 448 271**
**DE-A-3 128 726**
**DE-B-2 635 338**
**FI-B- 64 995**
**FR-A-2 392 302**
**FR-B-1 313 310**
**SE-B- 48 558**
**SE-B- 302 677**
**SE-B- 400 391**
**US-A-1 281 645**
**US-A-1 766 876**

(73) Proprietor: **HALTON OY**
**SF-47400 Kausala (FI)**

(72) Inventor: **AALTO, Erkki**
**Vatajantie 8 as 6**
**SF-47400 Kausala (FI)**
Inventor: **YLÄ-HEMMILÄ, Veikko**
**Laineentie 4 H**
**SF-47400 Kausala (FI)**

(74) Representative: **Higgins, Michael Roger et al**
**MARKS & CLERK 57/60 Lincoln's Inn Fields**
**London WC2A 3LS (GB)**

## Description

The present invention relates to a flow regulator for gaseous substances, in particular for air in air-conditioning and ventilation installations, and to its utilisation.

The flow regulator comprises an envelope and a regulating member disposed in a flow passage confined by the envelope, which regulating member moves automatically in response to changes in gas flow between a normal maximum opening position and a normal minimum opening position and between these positions maintains the volumetric flow of the gaseous substance at a desired magnitude with sufficient accuracy when the differential pressure acting across the flow regulator varies within given limits, and also a limiting member which limits the movement of the regulating member. In effect, the flow regulator is designed to achieve resonably constant volumetric flow over a range of differential pressures from the minimum opening position to the maximum opening position of the regulating member.

For mass manufacture, storage, distribution and use of the regulator, it is desirable that the regulator be easily and accurately adjusted at the site of installation, and even after installation. For balancing and inspection of an air-conditioning installation, it is desirable for it to be possible to observe from outside the regulator which is the set-point value, and how strongly the regulator throttles. In addition, the basic construction and manufacturing technique should be such that the required calibrating measures are as simple and minimal as possible and independent of the setting of the volumetric flow.

In prior art regulators, the movement of the regulating member cannot be steplessly limited. Therefore prior art regulators cannot be used at all for mere balancing without incurring the risk of binding. Secondly, the prior art regulators cannot be used for restricted and controlled correction. Thirdly, prior art regulators cannot be used in the best possible way in air-conditioning installations where the air quantities are varied, such as e.g. different air quantities in daytime and night running.

GB—A—2073404 discloses a flow regulator which has a small shoulder which is engaged by the regulating member immediately before its minimum opening position. The purpose of the shoulder is to prevent the regulating member jamming if the differential pressure rises too much, and thereby preventing proper operation of the flow regulator.

The object of the present invention is to provide an improvement in regulator designs known in the art. A more detailed aim of the invention is to provide a flow regulator in which the drawbacks present in prior art regulators have been overcome.

The present invention provides a flow regulator as set forth in Claim 1 and also utilisation of the flow regulator as set forth in Claim 10, 11 or 12. Claims 2 to 9 set forth optional features of the invention.

Using the flow regulator of the invention, several remarkable advantages can be gained. The movement of the regulating member may be restricted, or the movement of the regulating member may, if needed, be altogether arrested. Thus the flow regulator may be used in designs in which balancing is based merely on so-called single-pass regulating, giving no risk of binding. Secondly, the flow regulator may be used for restricted and controlled correction. Thirdly, the flow regulator may successfully be used in air-conditioning installations in which there is a desire to change the air flows by centralised action.

The flow regulator can operate in a comparatively wide volumetric flow range, e.g. a duct velocity of 2—8 m/s, without changing the pressure range in which the flow regulator operates. In addition, the flow regulator can operate with lower differential pressure, e.g. about 20 Pa, than any known regulator, in which the operating range is 20—200 Pa throughout the line. In the regulator of the invention, a turning angle of about 90° can be utilized, whereby by regulating also the effective flow aperture, a large movement of the regulating member can be achieved in proportion to the change of differential pressures, and a relatively wide operating range.

In known low-pressure regulators, in which the set-point value of volumetric flow can be regulated in a comparatively wide range, the lowest pressure at which the regulator starts to operate increases with increasing volumetric flow. Even at small volumetric flow rates, the lowest pressure is generally relatively high. The top pressure also increases in accordance with the set-point value of the volumetric flow.

Because the lowest pressure is high and/or because it depends on the set-point value of the volumetric flow, prior art regulators, in order to operate properly, require extra blower energy and potentially a larger blower; they have a great tendency to cause noise problems due to pressure increase, or a need for damping; they impede design; they cause difficulties when installing.

As a rule, accurate and stepless setting of the volumetric flow rate at the site of installation is extremely cumbersome and often impossible, particularly if the regulator has already been installed, nor can the set-point value of the volumetric flow rate be read directly. In prior art regulators, the throttling pressure with which the regulator throttles the flow cannot be read either. It is true that in certain prior art regulator designs dwelling within the operating range can be observed from the outside, but their volumetric flow rate cannot be regulated.

In the flow regulator of the invention, the volumetric flow rate may be adjusted steplessly and simply at the site of installation, even if the regulator has already been installed in place, simply by turning an adjusting knob of the flow regulator.

The volumetric flow rate may be read directly on a scale, as well as how much the regulator throttles, and whether the regulator is in the operating range, i.e. whether the correct air quantity is passing through the flow regulator, or too much or too little.

In prior art regulators, either a mass or spring, or a spring and bellows in combination, are used to provide the counterforce. Each of these designs has its advantages and disadvantages. Disadvantages when using springs are, for instance, relaxation of the spring, inaccuracies in manufacturing, susceptibility to damage, etc. Disadvantages of a mass used for counterforce have been that the flow through the regulator can only be horizontal, that the axis has to be horizontal, and that the mass must always be on the same side of the duct.

Advantages of a mass used for counterforce are, for instance, reliability in use, good manufacturing accuracy and constancy. Disadvantages of spring plus bellows are that the design is more prone to disturbances and more expensive than a mere spring and has a shorter life span.

In the flow regulator of the invention, a shiftable mass can be used advantageously for counterforce. In the regulator of the invention, however, the disadvantages of a mass can be eliminated. The flow regulator of the invention may be installed in a passage running in any direction, and the mass used for counterforce can be mounted on either side of the passage. This is due to the turning axis of the regulating member being installed horizontally by the aid of a levelling means provided in the flow regulator, and the mass is moreover so positioned that the mass is turned an equal amount with reference to the regulating member, but in the opposite direction, as is the deviation in each instance from a basic, horizontal installation.

In prior art regulators, for damping out the oscillations of the regulating member, or so-called hunting, a particular damping means is required. In certain prior art designs, dashpot-type damping is used. In another prior art regulator, bellows-type damping is used. Disadvantages of such damping designs include the fact that the damping designs may bind in the course of time, or that they may be blocked or damaged, that the designs require maintenance, and that they may impair accuracy.

Several advantageous embodiments of the invention have a regulating member which is a slightly curved plate or formed of two surfaces at a slight inclination to each other. The turning angle between the initial and ultimate positions of the regulating member is substantially of the same order at different volumetric flow rates when the differential pressure is the same. The operating range of the flow regulator is advantageously changeable by changing the effective flow aperture between the regulating member and the flow passage. With a regulating member of this profile, the flow regulator can be made accurate and silent, and move smoothly from one end position to the other. The regulator also requires no separate oscillation inhibiting means, certainly no oscillation inhibiting means liable to bind or gather dirt or to become blocked; in general, the counterpressure in the passage alone will keep the regulating member stable. The greatest contribution to this favourable feature comes from the profile of the regulating member, and from arranging that the regulating member does not nearly close the passage totally in any position; therefore, air can flow past the regulating member on all sides even when the regulating member is in its "closed" position. Other factors contributing to said favorable feature are, for instance, the size and shape of the regulating member, the position of the turning axis of the regulating member with reference to the regulating member, the size and location of the counterweight, and the limiting members.

The invention is described in detail by referring to an advantageous embodiment of the invention presented in the figures of the drawing attached, but to which the invention is not meant to be exclusively confined.

Fig. 1 presents an advantageous embodiment of the invention in a partly sectioned elevational view.

Fig. 2 shows the section along the line II—II in Fig. 1.

Fig. 3A presents an advantageous embodiment of the regulating member used in the flow regulator of the invention, in schematical elevational view.

Fig. 3B presents another advantageous embodiment of the regulating member used in the flow regulator of the invention, in schematical elevational view.

Fig. 3C presents a third advantageous embodiment of the regulating member used in the flow regulator of the invention, in schematical elevational view.

Fig. 3D presents a fourth advantageous embodiment of the regulating member used in the flow regulator of the invention, in schematical elevational view.

Fig. 3E presents a fifth advantageous embodiment of the regulating member used in the flow regulator of the invention, in schematical elevational view.

Fig. 3F presents a sixth advantageous embodiment of the regulating member used in the flow regulator of the invention, in schematical elevational view.

Fig. 4A presents in elevational view the initial and ultimate positions of the regulating member of the flow regulator, at high volumetric flow.

Fig. 4B presents in elevational view the initial and ultimate positions of the regulating member of the flow regulator, at small volumetric flow.

Fig. 5A presents the effective flow aperture of the flow regulator of the invention at the smallest when the regulating member is so regulated that the effective flow aperture is large, viewed from the flow direction.

Fig. 5B presents the effective flow aperture of the flow regulator of the invention at the smallest when the regulating member is so regulated that the effective flow aperture is small viewed from the flow direction.

Fig. 5C presents in elevational view the changing of the effective flow aperture of the flow regulator of the invention in a flow passage with variable cross-section.

Fig. 5D presents in elevational view the changing of the effective flow aperture of the flow regulator of the invention by means of separate regulating member.

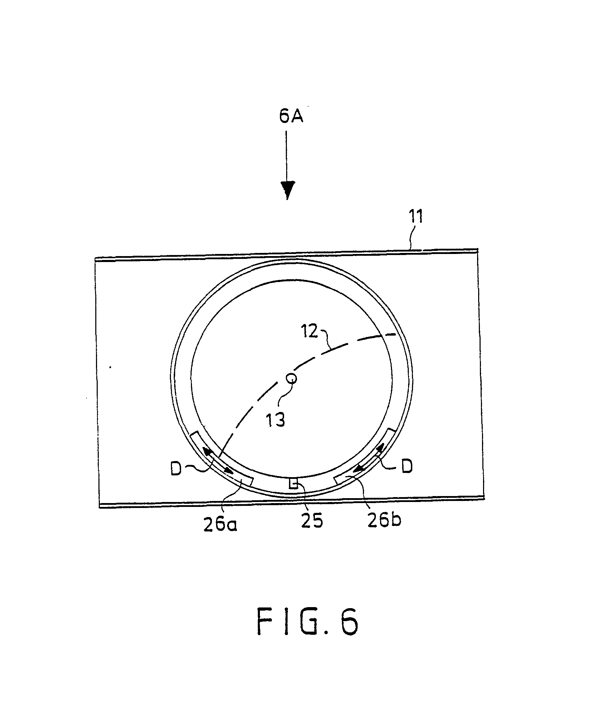

Fig. 6 presents the principle of limiting the differential pressure range of the flow regulator of the invention, in schematic elevational view.

Fig. 7 shows a detail of Fig. 6 viewed in the direction 6A.

Fig. 8 presents a mode of changing the operating range of the flow regulator of the invention, in schematic elevational view.

Fig. 9 presents the flow regulator of Fig. 1, seen in the direction from the cover of the protecting case, said cover being removed.

Fig. 10 shows the operating range of the flow regulator of the invention in graphic presentation.

Fig. 11 shows applications of the flow regulator of the invention in graphic presentation.

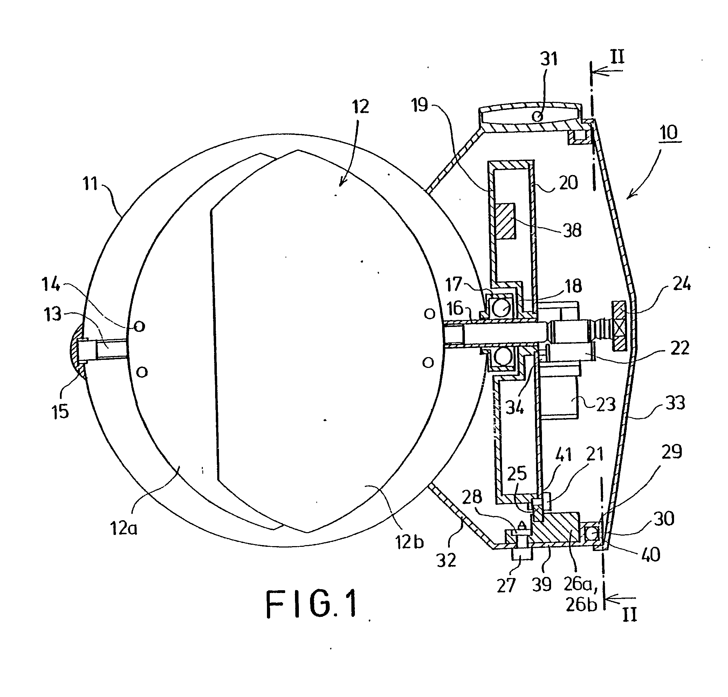

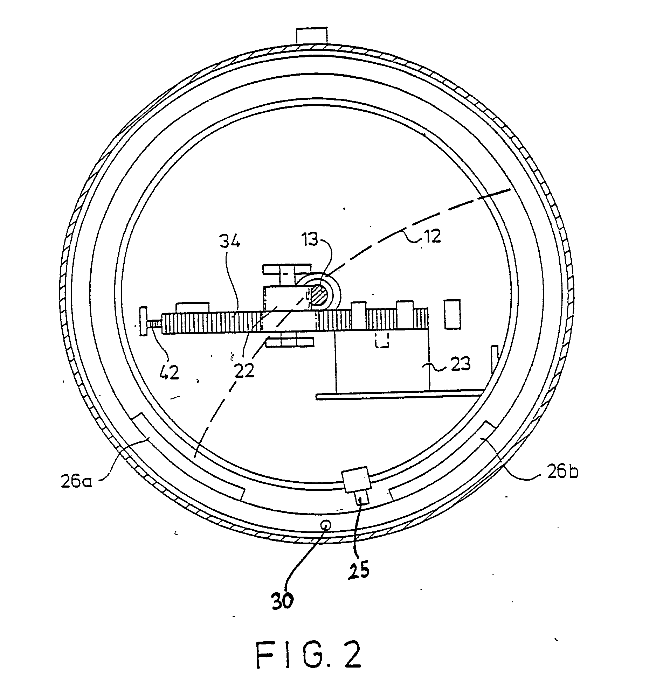

In the embodiment of Figures 1 and 2, the constant flow regulator of the invention is in general indicated by reference numeral 10. The regulator 10 comprises an envelope 11 and a regulating member 12 disposed in the envelope 11. In this embodiment, the regulating member is a curved flap-like regulating member composed of two overlapping curved parts or flaps 12a and 12b. The regulating member 12 is attached to a rotary shaft 13 by means of an adjusting and fixing nut 14 secured to the flap 12a and a combined sleeve, adjusting and fixing nut 16 secured to the flap 12b.

The shaft 13 is rotatably carried in the envelope 11 by bearings 15 and 18. The air flowing in the flow passage confined by the envelope 11 causes the regulating member 12 to turn, and a countertorque produced by a weight 23 has been disposed to place the regulating member 12 in a position producing the requisite throttling. The weight 23 is connected to the regulating member 12 by means of the combined sleeve, adjusting and fixing nut 16 and of a member 19 rotatably attached thereto and of a cover 20, and it turns together with the regulating member 12. The shaft 13 is installed horizontally using a levelling means and a levelling ball 31 provided in a protecting case 32.

As regards volumetric flow rate, the operating range of the constant flow regulator 10 regarding volumetric flow can be changed by turning an adjusting knob 24, whereby in this embodiment the size of the regulating member 12 and at the same time the effective flow aperture, the location of the weight 23 and the initial and ultimate positions of the regulating member 12 move in different directions to each other due to the different-handed threads on the shaft 13 and in the adjusting nuts 14, 16. One end of the shaft 13 is axially fixed in the bearing 15, whereby the rotation of the knob 24 also causes the member 19, rotatably connected by means of the sleeve 16 to one flap 12b of the regulating member 12, as well as the cover attached to the member 19, to move axially with reference to the shaft 13. A gear 22 attached to the cover 20 engages annular grooves formed on the shaft 13, and is rotated by the rack formed by the annular grooves during the axial movement of the member 19; the gear 22 also engages a toothed rack 34 to which the weight 23 is connected, so that the rotation of the gear 22 shifts the weight 23.

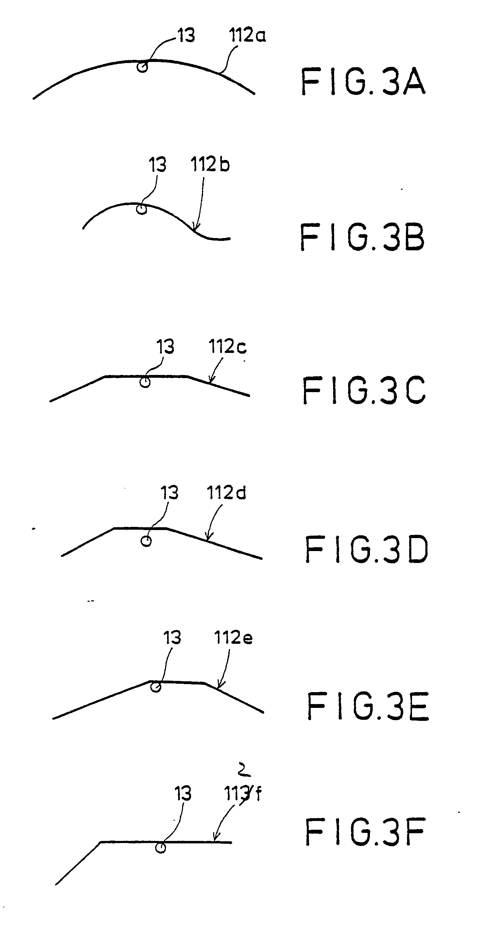

Figures 3A—3F illustrate some advantageous embodiments of the regulating member which can be employed in the regulator 10 of the invention. In Figures 3A—3D, both halves of the regulating member 112a, 112b, 112c and 112d are slightly curved or comprise two surfaces slightly inclined to each other, while in Figures 3E and 3F only one half of the regulating member 112e and 112f comprises two surfaces slightly inclined to each other.

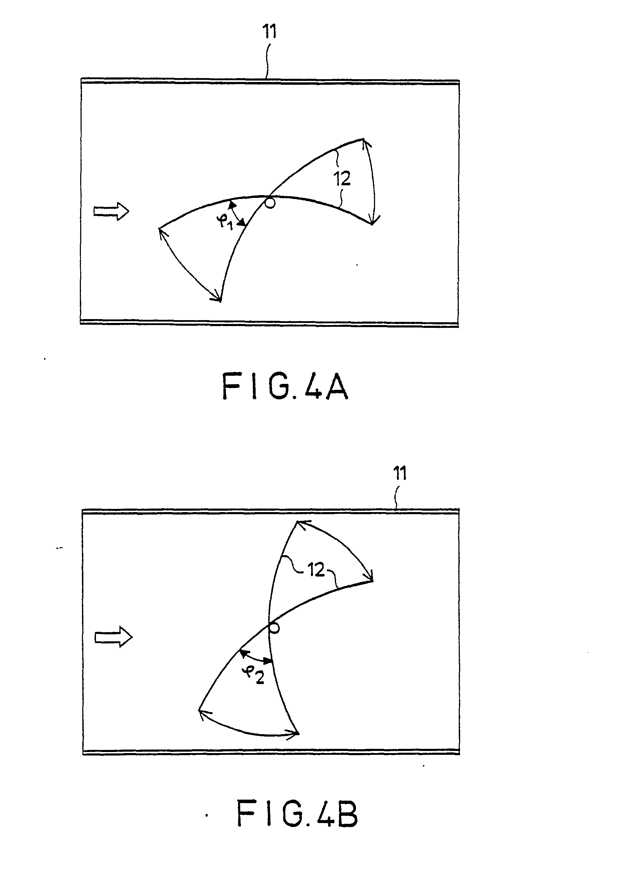

In Figures 4A and 4B is observed that at high volumetric flow rate, at the smallest differential pressure of the operating range, the regulating member 12 is in a more horizontal position than at a small volumetric flow rate at the same differential pressure.

Similarly, it is observed that at a small volumetric flow rate at the highest differential pressure of the operation range, the regulating member 12 is in a more vertical position than at a large volumetric flow at the same differential pressure.

The position of the regulating member 12 at the highest volumetric flow rate and at the smallest differential pressure of the operation range is advantageously about 90° from the position of the regulating member 12 at the smallest volumetric flow rate and the highest differential pressure of the operation range. In contrast, the turning angle $\phi_2$ for low volumetric flow rate is substantially of the same order as the respective turning angle $\phi_1$ for high volumetric flow rate when the differential pressure is the same. Thus, in the regulator 10 of the invention the turning angle $\phi_1$, $\phi_2$ of the regulating member 12 for the minimum and maximum differential pressures is substantially of the same order at different volumetric flow rates. At the same minimum and maximum value of the differential pressure $\Delta p$, the angle of rotation $\phi_1$, $\phi_2$ is advantageously about 60°

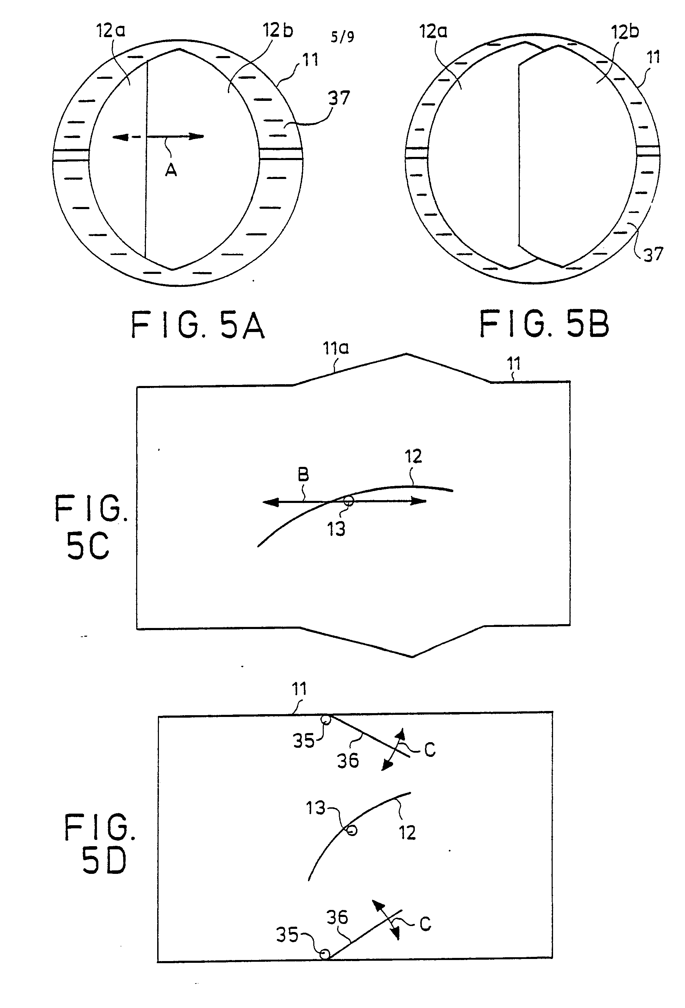

In the embodiment of Figures 5A and 5B, the effective flow aperture 37 of the flow regulator 10 of the invention is changed by changing the size of the regulating member 12. In this embodiment, the size of the effective flow aperture 37 is changed by moving the flaps 12a and 12b of the regulating member 12 in the manner indicated by the arrow A in Figure 5A.

In the embodiment of Figure 5C, the effective flow aperture 37 is changed by moving the regulating member 12 in a flow passage 11, 11a with varying cross-section as indicated by the arrow B, in other words, by shifting the regulating member 12 in the direction of flow.

In the embodiment of Figure 5D, the effective flow aperture 37 is changed by regulating the flow aperture with the aid of a separate regulating member 36, consisting of one or several parts, placed in the flow passage. The regulating members 36 may be rotated about axes or shafts 35 as indicated by arrows C.

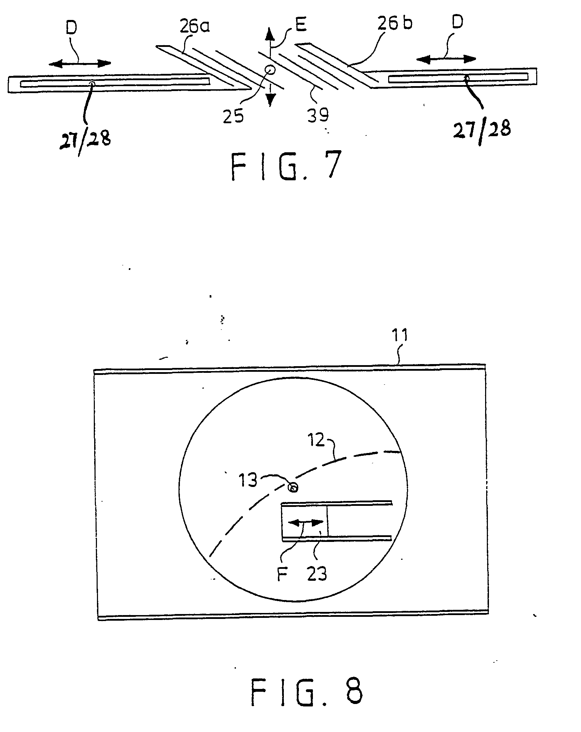

In the flow regulator 10 of the invention, the differential pressure range is limited by a limiting member or limiter pin 25 fixed with respect to the member 19 and two adjustable limiting members or limiters 26a, 26d. The limiters 26a, 26b can be moved in order to adjust their positions and are secured by elements 27, 28 shown in Figure 1. The limiters 26a, 26b limit the movement of the regulating member 12 towards its maximum opening position and towards its minimum opening position, respectively, with respect to the envelope or flow passage 11, 11a. The limiters 26a, 26b are positioned, or can be positioned, so as to prevent the regulating member 12 reaching its maximum opening position or reaching its minimum opening position, thereby restricting the differential pressure range in which the flow regulator 10 will operate automatically to maintain the volumetric flow at a desired magnitude. The limiters 26a, 26b are advantageously self-regulating in accordance with the volumetric flow rate that has been selected, as shown in Figure 7. In this case, the limiters 26a, 26b have inclined faces. The limiters 26a, 26b regulate themselves when the limiter pin 25 moves parallel to the regulating member shaft as the volumetric flow rate is regulated; i.e. as the knob 24 is turned, the limiter pin 25 moves in the directions indicated by the arrows E in Figure 7. The limiters 26a, 26b thus have engagement faces which are at an angle to the path of movement of the limiter pin 25 as the regulating member 12 turns so that if the limiter pin 25 is adjusted at right angles to this path of movement, the limiter pin 25 engages the respective limiting member 26a, 26b at a different point.

The movement of the regulating member 12 may be arrested totally or partially with the aid of the adjustable limiters 26a, 26b. The limiter pin 25 and the adjusting scale 39 (Figures 1 and 7) on the protective case 32 indicate the differential pressure Δp acting across the constant flow regulator 10. When the limiter pin 25 touches the limiter 26a, the differential pressure Δp is at its lowest, and when it touches the limiter 26b the differential pressure is at its highest. When the limiter pin 25 is not touching either of the limiters 26a, 26b, the flow regulator 10 is in the operating range; if the limiter pin 25 touches one of the limiters 26a, 26b, either too much or too little air is being admitted.

When the operating range of the flow regulator 10 is changed using the movable weight 23, the weight 23 is shifted as indicatied by the double arrow F in Figure 8. The weight 23 and the limiter pin 25 and limiters 26a, 26b automatically assign different initial and ultimate positions to the regulating member 12 at different volumetric flow rates.

In the flow regulator 10, the effect of gravity can be made the same independent of the orientation of the flow regulator 10, using the fixable cover 20 which is adjustable with reference to the shaft 13 of the regulating member 12, of the ball case 29 on the protecting case 32 and of the ball 30 moving in the case 29. During manufacture, the flow regulator 10 is balanced by a balancing weight 38 without the countertorque produced by the weight 23. The ball 30 and the scale 40 on the case 29 show the orientation of the flow regulator 10. The cover 20 is turned to a position corresponding to the orientation indicated by the ball 30 using a scale 41 on the cover 20, and is locked by a set screw 21.

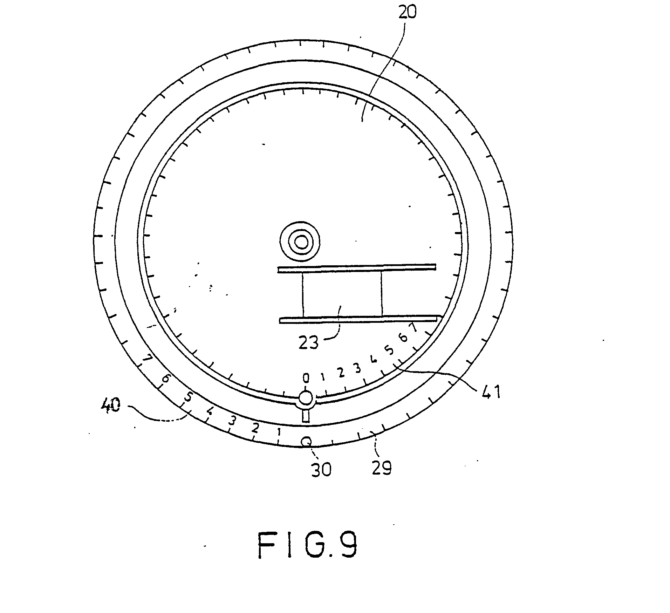

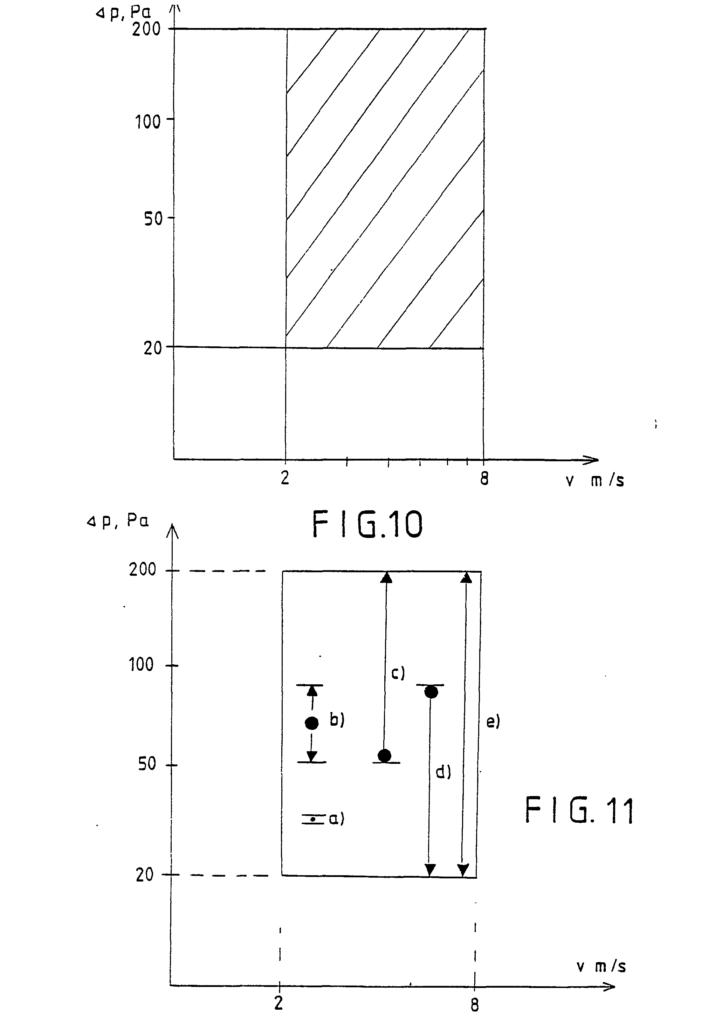

The operating range of the flow regulator 10 regarding volumetric flow rate V can be steplessly regulated so that the differential pressure range in which the flow regulator 10 operates will not change, as shown in Figure 10, or it can be made to change in any desired manner. In Figure 10, the hatched area indicates the range in which the flow regulator 10 operates. In the example of Figure 10, the ratio of the highest and lowest pressures of the operating range is 1:10, or e.g. 20—200 Pa, and the ratio 1:4 between the lowest and highest volumetric flow rate V is such that it corresponds to an air flow velocity range of 2—8 m/s. The operating range of the volumetric flow rate of the flow regulator 10 is regulated, as already described, by turning the regulating knob 24. The limiter pin 25, the limiters 26a, 26b and the weight 23 give the regulating member 12 different initial and ultimate positions at different volumetric flow rates. The end 42 of the gear rack 34 and the volumetric flow rate scale 41 on the cover 20 (see Figure 9) indicate the air flow to which the constant flow regulator 10 has been regulated. The limiter pin 25 and the scale 39 adjacent to the limiter pin 25 on the protecting case 32 (see Figure 7), in other words, the scale for setting the limiters 26a and 26b, indicate the differential pressure Δp across the regulator 10. If the limiter pin 25 is against one of the limiters 26a, 26b, the flow regulator 10 is not in its operating range, and too much or too little air is passing through the flow regulator 10. The position of the limiter pin 25 with reference to the scale 39 and the limiters 26a, 26b may be determined from outside the flow regulator 10.

In the flow regulator 10, the movement of the regulating member 12 may be restricted, or the regulating member 12 may be completely arrested, using the adjustable limiters 26a, 26b, as already described above. This affords various possibilites, as shown in Figure 11.

Instance a) shown in Figure 11 illustrates the case in which the regulator 10 is only used for balancing an air-conditioning installation. When an air-conditioning installation is being balanced, the regulating member 12 automatically assumes the correct position. Thereafter, the regulating member 12 is arrested by means of the limiters 26a 26b. The air-conditioning installation can be balanced in this way with flow regulators 10, which means that the air quantities are correct at every point in the air-conditioning installation, but the flow regulators 10 installed in the air-conditioning installation do not maintain the volumetric flow rate V unchanged if it tends to change due to an external influence. The air flow may then be altered centrally. Since they have been arrested, it does not matter if the regulators 10 become stuck.

Instance b) shown in Figure 11 illustrates the case in which the flow regulator 10 can impose a small correction, e.g. ±20 Pa. The regulating members 10 assume the correct position on balancing. In this case, the regulating members 12 of the flow regulators 10 are not completely arrested with the limiters 26a 26b; the regulating member 12 has a small amount of movement in both directions. In the event of minor pressure variations, the flow regulator 10 will correct the volumetric flow rate if the magnitude of the volumetric flow tends to change. On the other hand, if for some reason the flow regulator 10 gets stuck, it will even then cause no major error.

Instance c) shown in Figure 11 illustrates the case in which the air-conditioning installation is balanced with the largest air quantity. The flow regulator 10 is used in air-conditioning installations where air flows of different magnitudes are used. Usually a higher volumetric flow rate is used, for instance, during the daytime. When balancing the air-conditioning installation, the movement of the regulating member 12 is limited by the lowest pressure limiter 26a. In this way, the regulating member 12 prevents the increase of the air quantity in day-time operation but causes no problems whatsoever in night-time operation when the quantity of air is reduced by central action. If the resulting member 12 were allowed to turn to its fully open position, some point in the air-conditioning system could in night-time operation receive nearly as much air as in day-time operation, and another point would correspondingly receive very little.

Instance d) shown in Figure 11 illustrates the case in which the flow regulator 10 is used in air-conditioning installations where air flows of different magnitudes are used. The installation is balanced with a smaller air quantity. The movement of the regulating member 12 of the flow regulator 10 is limited with the highest pressure limiter 26b. The regulating member 12 cannot turn into its closed position, and will thus cause no problems when the air flow is increased by central action.

Instance e) shown in Figure 11 illustrates the case in which the flow regulator 10 is permitted to correct the air flow rate throughout the differential pressure range in which the flow regulator 10 operates satisfactorily. The limiters 26a, 26b are in their extreme positions.

In the foregoing are presented merely some of the advantageous embodiments of the invention, and it is apparent that various modifications may be made to them within the scope of the inventive idea presented in the Claims. For instance, it is not the intention to confine the invention exclusively to ducts or passages having a circular cross section.

**Claims**

1. A flow regulator (10) for gaseous substances, in particular for air in air-conditioning and ventilation installations, and comprising an envelope (11) and a regulating member (12) disposed in a flow passage confined by the envelope (11), which regulating member (12) moves automatically in response to changes in gas flow between a normal maximum opening position and a normal minimum opening position and between these positions maintains the volumetric flow of the gaseous substance at a desired magnitude with sufficient accuracy when the differential pressure ($\Delta_p$) acting across the flow regulator (10) varies within given limits, and also a limiting member (26b) which limits the movement of the regulating member (12), characterised in that the flow regulator (10) is provided with two limiting members (26a, 26b) which are positioned, or can be positioned, so as to prevent the regulating member (12) reaching its normal maximum opening position or reaching its normal minimum opening position, respectively, relative to the envelope (11), thereby restricting the differential pressure range in which the flow regulator will operate automatically to maintain the volumetric flow at the desired magnitude, and in that the maximum and the minimum limits of opening of the regulating member (12), as determined by the limiting members (26a, 26b), are adjustable.

2. The flow regulator of Claim 1, wherein the setting of the volumetric flow rate can be changed by actuation of an adjustable member (24) and wherein changing the volumetric flow rate automatically alters the maximum and the minimum limits of opening of the regulating member (12), as determined by the limiting members (26a, 26b), in accordance with the change in flow rate setting.

3. The flow regulator of Claim 2, wherein a limiting member (25) is arranged to engage one of the limiting members (26a) at the maximum opening position of the regulating member (12) and the other of the limiting members (26b) at the minimum opening position of the regulating member (12), the engagement face between the respective limiting members (25, 26a or 25, 26b) is at an angle to the relative movement between the respective limiting members (25, 26a or 25, 26b) as the regulating member (12) moves, and there is relative motion between the limiting members (25 and 26a, 26b) generally at right angles to said relative movement as the volumetric flow rate is adjusted.

4. The flow regulator of any of the preceding Claims, wherein the regulating member (12) turns when the differential pressure ($\Delta p$) acting across the flow regulator (10) changes and wherein there are two adjustable limiting members (26a, 26b) and a limiting member (25) which moves between the first two limiting members (26a, 26b) in synchronism with the regulating member (12).

5. The flow regulator according to any of the preceding Claims, wherein the operating range of the flow regulator (10) is changeable by changing the effective flow aperture (37) between the regulating member (12) and the envelope (11).

6. The flow regulator of any of the preceding Claims, wherein the flow regulator (10) is provided with a setting scale (39) for the limiting members (26a, 26b).

7. The flow regulator of Claim 6, wherein a movable limiting member (25) and the setting scale (39) are disposed to indicate the differential pressure ($\Delta p$) acting across the flow regulator (10).

8. The flow regulator of any of the preceding Claims, wherein at least that flow surface of the regulating member (12) which faces the flow of the gaseous substance is slightly curved or comprises two surfaces slightly inclined to each other.

9. The flow regulator of any of the preceding Claims, wherein the limiting members (26a, 26b) are disposed completely to arrest the movement of the regulating member (12).

10. Utilisation of the flow regulator of any of the preceding Claims, characterised in that the flow regulator (10) is incorporated in an air-conditioning installation, the flow regulator (10) is set, and the regulating member (12) is arrested by the limiting members (26a, 26b).

11. Utilisaion of the flow regulator of any of Claims 1 to 9, characterised in that the flow regulator (10) is incorporated in an air-conditioning installation, the flow regulator (10) is set, and the regulating member (12) is restricted to a small range of movement to correct the volumetric flow rate when the pressure varies to a relatively minor degree.

12. Utilisation of the flow regulator of any of Claims 1 to 9, characterised in that the flow regulator (10) is incorporated in an air-conditioning installation, the flow regulator (10) is set by setting the maximum or the minimum limit of opening of the regulating member (12) so as to be less than its normal maximum opening position or normal minimum opening position, the regulating member (12) being able to reach its normal minimum opening position or normal maximum opening position, respectively, thereby correcting the volumetric flow rate only when the pressure increases or decreases, respectively.

**Patentansprüche**

1. Durchflussregler für gasförmige Substanzen, insbesondere für Luft in Ventilations- und Klimaanlagen, mit einer Hülle (11) und einem Regelglied (12), der in einem Strömungskanal angeordnet und von der Hülle (11) begrenzt ist, wobei das Regelglied (12) sich automatisch abhängig von Änderungen in der Gasströmung zwischen einer normalen, maximalen Öffnungsposition und einer normalen, minimalen Öffnungsposition bewegt und zwischen diesen Positionen die volumetrische Strömung der gasförmigen Substanz mit einer gewünschten Stärke mit ausreichender Genauigkeit aufrechterhält, wenn der Differenzdruck (delta p), der quer über den Durchflussregler (10) einwirkt, innerhalb von gegebenen Grenzen variiert, und auch ein Begrenzungsglied (26b) die Bewegung des Regelglieds (12) begrenzt, dadurch gekennzeichnet, dass der Durchflussregler (10) mit zwei Begrenzungsgliedern (26a, 26b) versehen ist, die derart angeordnet sind oder werden können, dass sie den Regelglied (12) daran hindern, jeweils sein normale, maximale oder normale minimale Öffnungsposition in bezug auf die Hülle (11) zu erreichen, wodurch der Differentialdruckbereich begrenzt wird, in dem der Durchflussregler automatisch arbeitet, um die volumetrische Strömung bei der erwünschten Stärke aufrechtzuerhalten, und dass die von den Begrenzungsgliedern (26a, 26b) bestimmbare Maximal- und Minimalgrenze der Öffnung des Regelglieds (12) einstellbar sind.

2. Durchflussregler nach Anspruch 1, dadurch gekennzeichnet, dass die Einstellung der volumetrischen Strömungsgeschwindigkeit durch Betätigung eines einstellbaren Gliedes (24) geändert werden kann, und dass eine Änderung der volumetrischen Strömung die Maximal- und die Minimalgrenze zum Öffnen des Regelglieds (12) derart ändert, wie dies von den Begrenzungskörpern (26a, 26b) in Übereinstimmung mit der Änderung der Einstellung der Strömungsgeschwindigkeit erfolgt.

3. Durchflussregler nach Anspruch 2, dadurch gekennzeichnet, dass ein Begrenzungsglied (25) zum Eingreifen in einen der Begrenzungskörper (26a) in der maximalen Öffnungsposition des Regelglieds (12), und der andere Begrenzungskörper (26b) in der minimalen Öffnungsposition des Regelglieds (12) ausgelegt ist, wobei die Angriffsfläche zwischen den jeweiligen Begrenzungskörpern (25, 26a oder 25, 26b) in einem Winkel zur relativen Bewegung zwischen den jeweiligen Begrenzungskörpern (25, 26a oder 25, 26b) dann stattfindet, wenn sich das Regelglied (12) bewegt, und dass eine relative Bewegung zwischen den Begrenzungskörpern (25 und 26a, 26b) praktisch rechtwinklig zur relativen Bewegung stattfindet, wenn die volumetrische Strömungsgeschwindigkeit eingestellt wird.

4. Durchflussregler nach einem der vorangehenden Ansprüche, dadurch gekennzeichnet, dass das Regelglied (12) umkehrt, wenn sich der Differenzialdruck (delta p), der quer über den Regulator wirksam ist, ändert, und dass zwei einstellbare Begrenzungskörper (26a, 26b) und ein Begrenzungsglied (25) vorhanden sind, das sich zwischen den ersten zwei Begrenzugskörpern (26a, 26b) synchron mit dem Regelglied (12) bewegt.

5. Durchflussregler nach einem der vorangehenden Ansprüche, dadurch gekennzeichnet, dass der Betriebsbereich des Durchflussreglers (10) durch Änderung der effektiven Strömungsöffnung (37) zwischen dem Regelglied (12) und der Hülle (11) änderbar ist.

6. Durchflussregler nach einem der vorangehenden Ansprüche, dadurch gekennzeichnet, dass der Durchflussregler (10) mit einer Einstellskala (39) für die Begrenzungskörper (26a, 26b) ausgestattet ist.

7. Durchflussregler nach Anspruch 6, dadurch gekennzeichnet, dass ein bewegliches Bewegungsglied (25) und die Einstellskala (39) zur Anzeige des Differenzialdruckes (delta p) quer über den Durchflussregler (10) angeordnet sind.

8. Durchflussregler nach einem der vorangehenden Ansprüche, dadurch gekennzeichnet, dass mindestens die Strömungsfläche fes Regelglieds (12), welcher der Strömung der gasförmigen Substanz zugekehrt ist, leicht gebogen ist oder zwei Flächen einschliesst, die leicht zueinander geneigt sind.

9. Durchflussregler nach einem der vorangehenden Ansprüche, dadurch gekennzeichnet, dass die Begrenzungskörper (26a, 26b) zur vollständigen Aufhaltung der Bewegung des Regelglieds (12) angeordnet sind.

10. Verwendung des Durchflussreglers nach einem der vorgenannten Ansprüche, dadurch gekennzeichnet, dass der Durchflussregler (10) in eine Klimaanlage eingeschlossen ist, wobei das Regelglied (12) von Begrenzungskörper (26a, 26b) angehaltern wird.

11. Verwendung des Durchflussreglers nach einem der Ansprüche 1 bis 9, dadurch gekennzeichnet, dass der Durchflussregulator (10) in eine Klimaanlage eingeschlossen und einegestellt ist, und dass das Regelglied (12) auf einen kleinen Bewegungsbereich begrenzt ist, um die volumetrische Strömungsgeschwindigkeit zu korrigieren, wenn der Druck geringfügig variiert.

12. Verwendung des Durchflussreglers nach einem der Ansprüche 1 bis 9, dadurch gekennzeichnet, dass der Durchflussregulator (10) in eine Klimaanlage eingeschlossen ist und durch Einstellung der Maximums- oder Minimumsgrenze zum Öffnen des Regelglieds (12) derart eingestellt wird, dass er kleiner ist als die normale maximale oder normale minimale Öffnungsposition, wobei das Regelglied (12) in der Lage ist, jeweils die normale, minimale oder normale maximale Öffnungsposition zu erreichen, so dass die volumetrische Strömungsgeschwindigkeit korrigiert werden kann, wenn der Druck jeweils zu- oder abnimmt.

**Revendications**

1. Régulateur d'écoulement (10) pour substances gazeuses, en particulier pour l'air d'installations de conditionnement d'air et de ventilation, et comprenant une enveloppe (11) et un organe de régulation (12) disposée dans un passage d'écoulement entouré par l'enveloppe (11), lequel organe de régulation (12) se déplace automatiquement en réponse à des modifications de l'écoulement du gaz entre une position d'ouverture maximale normale et une position d'ouverture minimale normale entre ces positions maintient le flux volumétrique de la substances gazeuses dans une amplitude désirée avec une précision suffisante quand la pression différentielle ($\Delta p$) agissant sur le régulateur d'écoulement (10) varie à l'intérieur de limites données, et également un organe limiteur (26b) qui limite le mouvement de l'organe de régulation (12), caractérisé en ce que le régulateur d'écoulement (10) est muni de deux organes limiteurs (26a, 26b) qui sont positionnés, ou peuvent être positionnés, de manière à éviter que l'organe de régulation (12) atteigne sa position d'ouverture maximale normale ou sa position d'ouverture minimale normale, respectivement, par rapport à l'enveloppe (11), limitant ainsi la plage de pression différentielle dans laquelle fonctionne automatiquement le régulateur d'écoulement pour maintenir le flux volumétrique dans l'amplitude désirée, et en ce que les limites maximale et minimale d'ouverture de l'organe de régulation (12), déterminées par les organes limiteurs (26a, 26b), sont ajustables.

2. Régulateur d'écoulement selon la revendication 1, dans lequel le réglage du débit volumétrique peut être modifié par l'actionnement d'une organe ajustable (24) et dans lequel la modification du débit volumétrique modifie automatiquement les limites maximale et minimale de l'ouverture de l'organe de régulation (12), déterminées par les organes limiteurs (26a, 26b), en fonction de la modification du réglage du débit.

3. Régulateur d'écoulement selon la revendication 2, dans lequel un organe limiteur (25) est agencé pour coopérer avec l'un des organes limiteurs (26a) dans la position d'ouverture maximale de l'organe de régulation (12) et l'autre des organes limiteurs (26b) dans la position d'ouverture minimale de l'organe de régulation (12), la face coopérante entre les organes limiteurs respectifs (25, 26a ou 25, 26b) formant un angle par rapport au mouvement relatif entre les organes limiteurs respectifs (25, 26a ou 25, 26b) quand l'organe de régulation (12) se déplace, et il existe un mouvement relatif entre les organes limiteurs (25, et 26a, 26b) de façon générale à angle droit par rapport audit mouvement relatif quand le débit volumétrique est ajusté.

4. Régulateur d'écoulement selon l'une quelconque des revendications précédentes, dans lequel l'organe de régulation (12) tourne lorsque la pression différentielle ($\Delta p$) qui agit sur le régulateur d'écoulement (10) se modifie, et dans lequel sont prévus deux organes limiteurs ajustables (26a, 26b) et un organe limiteur (25) qui se déplace entre les deux premiers organes limiteurs (26a, 26b) en synchronisme avec l'organe de régulation (12).

5. Régulateur d'écoulement selon l'une quelconque des revendications précédentes, dans lequel la plage d'actionnement du régulateur d'écoulement (10) peut être modifiée en modifiant l'ouverture d'écoulement effective (37) entre l'organe de régulation (12) et l'enveloppe (11).

6. Régulateur d'écoulement selon l'une quelconque des revendications précédentes, dans lequel le régulateur d'écoulement (10) est muni d'une échelle de réglage (39) pour les organes limiteurs (26a, 26b).

7. Régulateur d'écoulement selon la revendication 6, dans lequel un organe limiteur mobile (25) et l'échelle de réglage (39) sont disposés de façon à indiquer la pression différentielle (Δp) agissant sur le régulateur d'écoulement (10)

8. Régulateur d'écoulement selon l'une quelconque des revendications précédentes, dans lequel au moins la surface d'écoulement de l'organe de régulation (12) qui est face au courant de la substances gazeuses est légèrement incurvée ou comprend deux surfaces légèrement inclinées l'une vers l'autre.

9. Régulateur d'écoulement selon l'une quelconque des revendications précédentes, dans lequel les organes limiteurs (26a, 26b) sont disposés de façon à arrêter totalement le mouvement de l'organe de régulation (12).

10. Utilisation du régulateur d'écoulement selon une quelconque des revendications précédentes, caractérisé en ce que le régulateur d'écoulement (10) est incorporé dans une installation de conditionnement d'air, le régulateur d'écoulement (10) est réglé et l'organe de régulation (12) est arrête par les organes limiteurs (26a, 26b).

11. Utilisation du régulateur d'écoulement selon une quelconque des revendications 1 à 9, caractérisé en ce que le régulateur d'écoulement (10) est incorporé dans une installation de conditionnement d'air, le régulateur d'écoulement (10) est réglé, et l'organe de régulation (12) est limité à une petite plage de mouvement pour corriger le débit volumétrique quand la pression varie de façon relativement mineure.

12. Utilisation du régulateur d'écoulement selon une quelconque des revendictions 1 à 9, caractérisé en ce que le régulateur d'écoulement (10) est incorporé dans une installation de conditionnement d'air, le régulateur d'écoulement (10) est réglé par réglage de la limite maximale ou minimale d'ouverture de l'organe de régulation (12) de manière à être inférieure à sa position d'ouverture maximale normale ou à sa position d'ouverture minimale normale, l'organe de régulation (12) étant apte à atteindre sa position d'ouverture minimale normale ou sa position d'ouverture maximale normale respectivement, corrigeant ainsi le débit volumétrique seulement quand la pression augmente ou diminue, respectivement.

FIG.1

FIG. 2

EP 0 144 370 B1

13　112a

FIG.3A

13　112b

FIG.3B

13　112c

FIG.3C

13　112d

FIG.3D

13　112e

FIG.3E

2

13　112f

FIG.3F

3

11

12

$\varphi_1$

# FIG.4A

11

12

$\varphi_2$

# FIG.4B

4

FIG. 5A

FIG. 5B

FIG. 5C

FIG. 5D

FIG. 6

FIG. 7

FIG. 8

FIG.9

EP 0 144 370 B1

FIG.10

FIG. 11

9